# EUROPÄISCHE PATENTSCHRIFT

(11) **EP 3 106 394 B1**
(45) Veröffentlichungstag und Bekanntmachung des Hinweises auf die Patenterteilung: **18.07.2018**
(21) Anmeldenummer: 16170902.7
(22) Anmeldetag: 23.05.2016
(51) Int. Cl.: B65B 1/00

(54) **VERPACKUNGSANLAGE UND VERFAHREN ZUM VERPACKEN EINES PRODUKTS**
PACKING UNIT AND METHOD OF PACKAGING A PRODUCT
INSTALLATION D'EMBALLAGE ET PROCEDE D'EMBALLAGE D'UN PRODUIT

(30) Priorität: 15.06.2015 DE 102015210972
(43) Veröffentlichungstag der Anmeldung: 21.12.2016
(73) Patentinhaber: Windmöller & Hölscher KG, 49525 Lengerich (DE)
(72) Erfinder: Hawighorst, Thomas, 49525 Lengerich (DE); Hohenbrink, Martin, 49525 Lengerich (DE); Narberhaus, Daniel, 49525 Lengerich (DE)

(56) Entgegenhaltungen:
- EP-A2- 2 555 066
- WO-A1-2013/018074
- DE-A1-102005 037 916
- DE-A1-102008 033 549

## Beschreibung

Die Erfindung betrifft eine Verpackungsanlage und ein Verfahren zum Verpacken eines Produkts in eine Mehrzahl an Säcken oder Beuteln.

In einer solchen Verpackungsanlage werden oft größere Mengen eines Produkts, welches insbesondere schütt-, riesel- oder fliesfähig ist, in transportfähige Mengen verpackt.

Eine solche Verpackungsanlage ist auf einer größeren Fläche aufgestellt, so dass der Bediener nur schwierig die komplette Anlage stets im Blick haben kann (WO 2013/018074 A1). Insbesondere Alarme können übersehen werden. Auch die Bedienung der kompletten Anlage ist aufgrund der räumlichen Entfernungen zeitraubend und damit schwierig.

Die Aufgabe der vorliegenden Erfindung ist es daher, eine Verpackungsanlage und ein Verfahren zum Verpacken eines Produkts in eine Mehrzahl an Säcken oder Beuteln derart weiterzubilden, dass sie einfacher bedient werden kann.

Die Aufgabe wird durch die Merkmale der Ansprüche 1 und 8 gelöst. In den angegebenen Unteransprüchen sind weitere Ausgestaltungen der erfindungsgemäßen Verpackungsanlage angeben, wobei die Merkmale, die im Zusammenhang mit der erfindungsgemäßen Verpackungsanlage angegeben sind, auch in Verbindung mit dem erfindungsgemäßen Verfahren gebracht werden können. Gemäß der Erfindung kann die Verpackungsanlage eine Absackvorrichtung umfassen, in welche das Produkt, welches oft in einem Silo vorgehalten wird, in einzelne Säcke oder Beutel abgesackt wird. Solche Vorrichtungen werden Form-, Füll- und Schließmaschinen genannt, da aus schlauchförmigem Material einzelne, oben offene Säcke erzeugt werden, die in der Vorrichtung zusätzlich auch mit dem Produkt befüllt und am oberen, offenen Ende verschlossen werden.

Erfindungsgemäß kann die Verpackungsanlage eine Vorrichtung zum Palettieren einer Mehrzahl von mit dem Produkt befüllten Säcken oder Beuteln umfassen, wobei mehrere, in der Regel nacheinander zugeführte Säcke zu einer Lage zusammengefasst und angeordnet werden. Mehrere solcher Lagen werden sukzessive auf einer Palette aufgeschichtet, bis eine gewünschte Höhe erreicht ist.

Eine erfindungsgemäße Verpackungsanlage kann eine Ladungssicherungsvorrichtung zum Sichern von mit Säcken beladenen Paletten (Palettensicherungsvorrichtung) umfassen, wobei in der Regel die mit Säcken beladene Palette mit einem Kunststofffolienüberzug (Stretchhaube) versehen wird oder mit einer Folie, insbesondere einer Stretchfolie, eingewickelt wird. Eine derart gesicherte Palette ist nun in der Regel transportfähig.

Die Erfindung umfasst nun eine beliebige Kombination von zumindest zwei dieser Vorrichtungen. Gemäß der vorliegenden Erfindung ist eine Datenleitung vorgesehen, mit welcher wenigstens zwei der vorgenannten Vorrichtungen miteinander verbunden sind. Auf diese Weise ist es ermöglicht, dass Daten von einer der Vorrichtungen an eine der anderen Vorrichtungen übertragen werden. Damit kann es dem Bediener, der sich an einer der Vorrichtungen befindet, ermöglicht sein, sich über die andere Vorrichtung zu informieren und/oder diese zu bedienen, ohne dass er sich zu der betreffenden Vorrichtung bewegen muss.

In einer vorteilhaften Ausführungsform ist es vorgesehen, dass die Datenübertragungseinrichtung ein LAN-Netzwerk umfasst. Damit ist ein kabeigebundenes Netzwerk (Draht, Glasfaser etc.) gemeint. Grundsätzlich ist auch jegliche Art von funkbasierten Netzwerken denkbar, jedoch bietet ein kabelgebundenes Netzwerk wegen der gewöhnlich höheren Datenübertragungsraten besondere Vorteile. Insbesondere, wenn die Vorrichtungen stationär angeordnet sind, ist das Verlegen von Kabeln kein gravierender Nachteil.

In einer vorteilhaften Weiterbildung der Erfindung ist vorgesehen, dass die Datenübertragungseinrichtung ein ethernetbasiertes Netzwerk umfasst. Demnach ist die Ethernet-Technologie, die Datenübertragungsprotokolle mit einem kabelgebundenen Datennetz kombiniert, vorsehbar. Gemäss der Erfindung ist vorgesehen, dass wenigstens eine der Vorrichtungen einen Datenbestand umfasst, wobei mit einer der anderen Vorrichtungen über die Datenübertragungseinrichtung auf den Datenbestand zugreifbar ist. Damit wird es dem Bediener insbesondere ermöglicht, von der Vorrichtung, an der er sich gerade aufhält, sämtliche Informationen, etwa zu Ereignissen, die aufgetreten sind, einer anderen Vorrichtung zu beschaffen und diese zu verarbeiten. Andersherum kann er den Datenbestand der anderen Vorrichtung verändern, beispielsweise, indem er dort einen eingestellten Produktionsparameter verändert. Dabei umfasst jede der Vorrichtungen eine eigene Datenbank, um auch eigene Daten, also die Daten, die die jeweilige Maschine betreffen, aufzuzeichnen. Es wird also dem Bediener ermöglicht, von allen Vorrichtungen aus auf den Datenbestand aller Vorrichtungen zuzugreifen, wobei die Daten zu allen Vorrichtungen bevorzugt in einer einzigen Darstellung anzeigbar sind. In diesem Fall wird die Bedienung der gesamten Verpackungsanlage besonders vereinfacht.

Vorteilhaft ist es, wenn wenigstens eine der Vorrichtungen einen Massenspeicher umfasst. Insbesondere kann in jeder Vorrichtung ein Massenspeicher vorgesehen sein, was die bereits oben beschriebenen Vorteile bietet. Vorteilhaft ist es allerdings auch, wenn der Massenspeicher in einer der Vorrichtungen lokalisiert ist, was den technischen Aufwand verringert. Insbesondere kann in diesem Fall eine Recheneinrichtung vorgesehen sein, die Daten aus den Vorrichtungen empfängt und dem Massenspeicher in einem einheitlichen Datenformat übergibt.

Der Massenspeicher und/oder die Recheneinrichtung können im Schaltschrank der jeweiligen Vorrichtung vorgesehen sein, was insbesondere den Verkabelungsaufwand gering hält. Weiterhin ist erfindungsgemäss vorgesehen, dass über die Datenübertragungseinrichtung Datensätze zwischen den Vorrichtungen austauschbar sind, wobei die Datensätze ein gemeinsames Datenformat aufweisen. Mit einem gemeinsamen Datenformat ist es besonders einfach, diese Daten gemeinsam darzustellen, ohne zunächst Umformatierungen bzw. Konvertierungen vornehmen zu müssen. Dem Bediener erscheint damit die Datendarstellung wie eine Darstellung aus einer einzigen Datenquelle, auch wenn die Daten von den verschiedenen Vorrichtungen stammen. Auch kann es damit möglich sein, dass die Daten zu bestimmten Ereignissen in einer der Vorrichtungen generiert, aber auch in einer der weiteren Vorrichtungen gespeichert werden. Dieses kann beispielsweise die Transporteinrichtungen zwischen zwei Vorrichtungen betreffen. Hier kann beispielsweise die Transporteinrichtung zwischen Absackvorrichtung und Palettiervorrichtung von der Palettiervorrichtung gesteuert, die Daten jedoch auch in der Absackvorrichtung gespeichert werden.

Vorteilhaft ist es dabei, wenn die Datensätze in einem gemeinsamen Datenformat in dem Massenspeicher speicherbar sind. Somit können gleichartige Rechenprogramme auf den Recheneinrichtungen der einzelnen Vorrichtungen laufen, was den Programmieraufwand minimiert. Weiterhin ist ein Bedien- und Informationssystem an wenigstens einer der Vorrichtungen vorgesehen. Mit diesem Bedien- und Informationssystem wird dem Bediener ein Endgerät zur Verfügung gestellt, mit welchem er Informationen über sämtliche Vorrichtungen erhalten und alle Vorrichtungen steuern kann. Dies vereinfacht die Bedienung der kompletten Verpackungsanlage erheblich.

Weitere Vorteile, Merkmale und Einzelheiten der Erfindung gehen aus der nachfolgenden Beschreibung hervor, in der unter Bezugnahme auf die Figuren verschiedene Ausführungsbeispiele im Einzelnen erläutert sind. Im Rahmen der gesamten Offenbarung gelten Merkmale und Einzelheiten, die im Zusammenhang mit dem erfindungsgemäßen Verfahren beschrieben sind, selbstverständlich auch im Zusammenhang mit der erfindungsgemäßen Verpackungsanlage und jeweils umgekehrt, so dass bezüglich der Offenbarung zu den einzelnen Aspekten der Erfindung stets wechselseitig Bezug genommen wird beziehungsweise werden kann. Die einzelnen Figuren zeigen:
- Fig. 1: schematische Darstellung einer erfindungsgemäßen Verpackungsanlage
- Fig. 2: schematische Darstellung einer weiteren erfindungsgemäßen Verpackungsanlage
- Fig. 3: Funktionsdarstellung eines Datenfilters einer erfindungsgemäßen Verpackungsanlage
- Fig. 4: Bildschirmdarstellung einer Vorrichtung der erfindungsgemäßen Verpackungsanlage

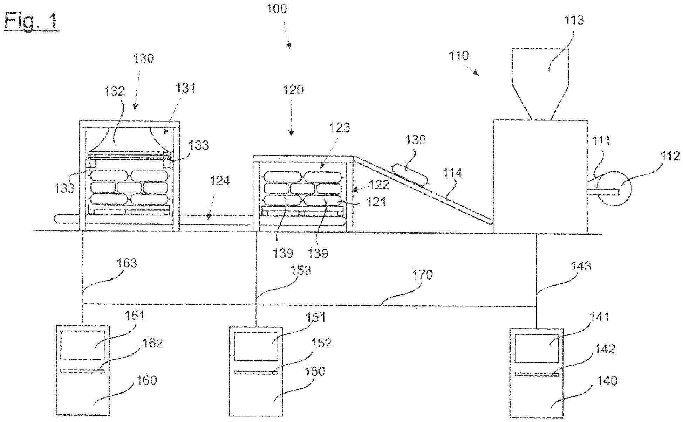

Fig. 1 zeigt eine schematische Darstellung einer erfindungsgemäßen Verpackungsanlage 100, die eine Absackanlage 110, eine Palettiervorrichtung 120 und eine Ladungssicherungsvorrichtung 130. Die Absackanlage 110 ist mit einem schlauchförmigen Verpackungsmittel 111, das auf einer Rolle 112 gespeichert ist, versorgt. Dieses Verpackungsmittel 111 wird von der Rolle 112 abgezogen. Das vordere Ende dieses Verpackungsmittels 111 wird mit einer Bodennaht versehen und nach einer Sacklänge abgetrennt, so dass ein oben offener Sack entsteht. Dieser wird an seinem oberen Ende durch Greiferpaare ergriffen und zu einer Füllstation transportiert. Dort wird das obere Ende aufgezogen, so dass das Innere des Sackes zugänglich ist. Nun kann der Sack mit dem abzusackenden Produkt, welches frei fließend ist, aber aus einem Feststoff besteht (also nicht flüssig) in der gewünschten Menge, beispielsweise 25 kg, befüllt werden. Das Produkt ist dabei in einem Silo 113 gespeichert und wird von dort abgezogen. Anschließend wird der noch offene, aber schon befüllte Sack zu einer Schließstation verbracht, wo eine den Sack verschließende Kopfnaht angebracht wird, in der Regel im Schweißverfahren.

Die befüllten Säcke 139 werden nun mit einer Transporteinrichtung 114, die mehrere Förderbänder umfassen kann, zur Palettiervorrichtung 120 transportiert. Dort werden mehrere Säcke 139 oberhalb einer Palette 121 gesammelt und angeordnet. Diese Anordnung von Säcken wird auf die Palette abgelegt und bildet dort eine Sacklage 122. In jeder Sacklage sind die Säcke in der Regel gegenüber der vorherigen Sacklage variierend angeordnet, um so die Stabilität des Sackstapels 123 zu erhöhen.

Die fertig bepackte Palette 121 wird nun über eine Fördereinrichtung 124 zur Ladungssicherungsvorrichtung 130 verbracht, wo die bepackte Palette mit einem Überzug, einer so genannten Stretchhaube 131 versehen wird. Dazu sind an jeder Ecke, aber oberhalb der bepackten Palette jeweils ein Refffinger 133 angeordnet, auf den ein Folienschlauch 132 mit einer gewissen Länge gespeichert wird. Anschließend bewegen sich die Refffinger diagonal nach außen, so dass sie sich in horizontaler Richtung gesehen außerhalb der Abmaße der Palette befinden. Dabei wird der Folienschlauch 132 gedehnt. Nun können sich die Refffinger abwärts bewegen und geben dabei sukzessive den Folienschlauch ab, so dass sich eine glatte Haube über der bepackten Palette ergibt. Vor oder während der Abwärtsbewegung der Refffinger wird der Folienschlauch 132 entsprechend der benötigten Länge abgetrennt und mit einer Schweißnaht verschlossen, so dass die Haube 131 oben geschlossen ist. Die Stretchhaube hat nicht nur die Aufgabe, die Säcke während eines Transports sicher auf der Palette zu halten, sondern kann auch dem Schutz vor Umwelteinflüssen, wie etwa vor Feuchtigkeit, dienen.

Jede der genannten Vorrichtungen 110, 120, 130 umfasst in diesem Ausführungsbeispiel eine Bedien- und Informationseinrichtung 140, 150, 160, die jeweils Informationen zu Ereignissen in der jeweiligen Vorrichtung speichert und bereitstellt. Dazu kann die Bedien- und Informationseinrichtung eine Recheneinrichtung und wenigstens einen Massenspeicherbaustein, beispielsweise in Form eine Festplatte auf magnetischer Basis und/oder einen Solid-State-Drive (Halbleiterlaufwerk), umfassen. In diesem Speicherbaustein lassen sich nun zu verschiedenen, aber festgelegten Ereignissen Informationen speichern. Einige dieser Ereignisse, beispielsweise "Herstellung eines befüllten Sacks oder Beutels", erfolgen fortwährend, während andere Ereignisse unregelmäßig stattfinden können. Dennoch erfolgt zu all diesen Ereignissen die Speicherung der zugehörigen Informationen.

Die Bedien- und Informationseinrichtung 140, 150, 160 kann jeweils auch einen Bildschirm 141, 151, 161 umfassen, auf welchen sich Ansichten anzeigen lassen, die verschiedene der gespeicherten Informationen umfassen. Weiterhin kann eine Eingabevorrichtung 142, 152, 162 vorgesehen sein, mit welcher sich beispielsweise Befehle eingeben lassen, die zu den genannten Ansichten führen. Datenleitungen 143, 153, 163 führen von verschiedenen Bauelementen der Vorrichtungen zur Bedien- und Informationseinrichtung 140, 150, 160.

Weiterhin ist eine die Vorrichtungen und auch die Bedien- und Informationseinrichtungen vernetzende Datenleitung 170 gezeigt. Damit ist es möglich, von einer der Bedien- und Informationseinrichtungen 140, 150, 160 auf alle anderen Bedien- und Informationseinrichtungen 140, 150, 160 beziehungsweise auf die Vorrichtungen 110, 120, 130 zuzugreifen.

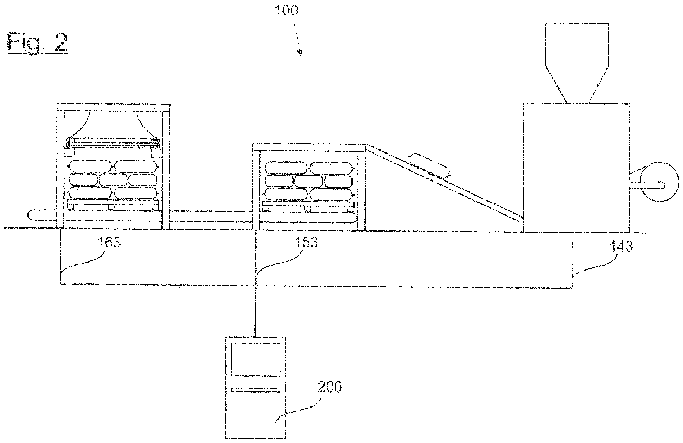

Die Figur 2 zeigt eine schematische Darstellung einer weiteren erfindungsgemäßen Verpackungsanlage 100, wobei die Vorrichtungen 110, 120, 130 der Ausführungsform der Figur 1 entsprechen, wobei die einzelnen Bezugszeichen der Übersichtlichkeit wegen nicht dargestellt sind. Ein Unterschied zur Ausführungsform der Figur 1 ist, dass die Datenleitungen 143, 153, 163 zu einer gemeinsamen Speichereinrichtung 200 führen, welche zentral für alle Vorrichtungen die genannten Informationen speichert. Die eigentlichen Speicherbausteine können alternativ und erfindungskonform in den einzelnen Vorrichtungen angeordnet sein und dort die Informationen speichern, was die Betriebssicherheit erhöht, etwa falls eine der Vorrichtungen ausfällt. Die Speichereinrichtung 200 kann in diesem Fall vornehmlich der Informationsverarbeitung und -darstellung dienen. Man kann also davon sprechen, dass die drei Vorrichtungen 110, 120, 130 miteinander vernetzt sind.

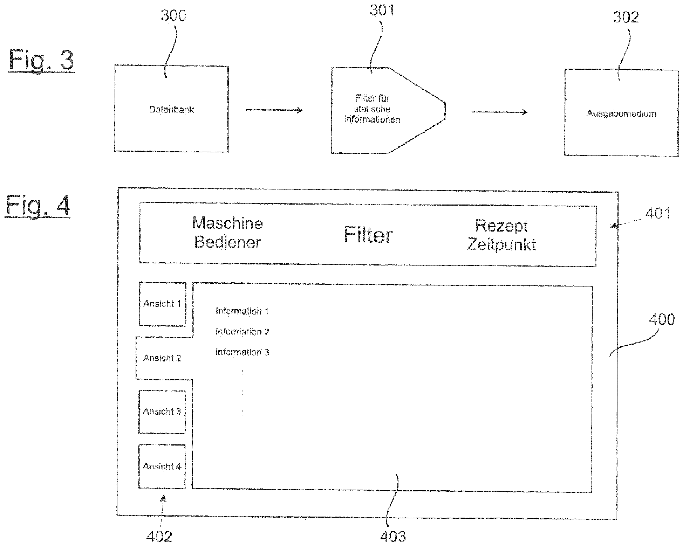

Die Figur 3 zeigt eine Funktionsdarstellung eines Datenfilters einer erfindungsgemäßen Verpackungsanlage. Dargestellt ist eine Datenbank, welche eine softwaretechnische Verknüpfung von Ereignissen und den zugehörigen Informationen bereitstellt sowie die Speicherung in den Speicherbausteinen organisiert. Zudem stellt die Datenbank die Informationen auch bei Abfragen zur Verfügung.

Bei einer speziellen Datenabfrage lassen sich nun in der dargestellten Ausführungsform Daten abfragen, wobei sich lediglich Suchkriterien bzw. Suchbereiche für die statischen Informationen zugelassen sind. So kann beispielsweise der Benutzer, das Rezept, der Zeitpunkt und die Maschine für die Datenabfrage festgelegt werden. Es kann beispielsweise nach allen Informationen gesucht werden, die zu Ereignissen gehören, die innerhalb der letzten 24 Stunden eingetreten sind. Eine entsprechende Datenabfrage in den dynamischen Informationen ist nicht vorgesehen. Die Datenabfrage ist in der Figur 3 als Filter 301 dargestellt. Die Datenabfrage ist anschließend durch ein Ausgabemedium 302, beispielsweise einem Bildschirm, dem Benutzer mitteilbar.

Die Figur 4 zeigt eine Ausführungsform für eine Darstellung der Ergebnisse einer Datenabfrage auf einem Bildschirm 400 einer der Bedien- und Informationssysteme. In einem Darstellungsbereich 401 ist der Filter dargestellt, d.h. der Schriftzug "Filter" steht für den Filternamen. Unter diesem Filternamen kann der Filter mit den entsprechenden Suchkriterien abgespeichert sein oder werden. In dem Darstellungsbereich 402 sind nun alle Ereignisse angezeigt oder alle Ereignisse angezeigt, deren statische Informationen den Suchkriterien entsprechen. Das angezeigte Ereignis ist in der Figur 4 als Ansicht 1, Ansicht 2 usw. dargestellt. Eine der Ansichten ist nun auswählbar, wobei alle statischen und/oder dynamischen Informationen zu dem ausgewählten Ereignis anzeigbar sind. Hierzu steht der Darstellungsbereich 403 zur Verfügung.

Das Ausführungsbeispiel der Figur 3 und der Figur 4 dient der einfachen Formulierung eines Filters sowie der übersichtlichen Darstellung der Suchergebnisse. Dies kann, wie beschrieben, durch eine der Bedien- und Informationseinrichtungen 140, 150, 160 für alle Vorrichtungen erfolgen. Auf diese Weise kann sich ein Bediener schnell über wichtige Dinge der Verpackungsanlage, wie beispielsweise zurückliegende Wartungsarbeiten informieren.

| **Bezugszeichenliste** | |
|---|---|
| 100 | Verpackungsanlage |
| 110 | Absackanlage |
| 111 | Verpackungsmittel |
| 112 | Rolle |
| 113 | Silo |
| 114 | Transporteinrichtung |
| 120 | Palettiervorrichtung |
| 121 | Palette |
| 122 | Sacklage |
| 123 | Sackstapel |
| 124 | Fördereinrichtung |
| 130 | Ladungssicherungsvorrichtung |
| 131 | Stretch haube |
| 132 | Folienschlauch |
| 133 | Refffinger |
| 139 | Befüllte Säcke |
| 140, 150, 160 | Bedien- und Informationseinrichtung |
| 141, 151, 161 | Bildschirm |
| 142, 152, 162 | Eingabevorrichtung |
| 143, 153, 163 | Datenleitung |
| 170 | Datenleitung |
| 200 | Speichereinrichtung |
| 301 | Filter |
| 302 | Ausgabemedium |
| 400 | Bildschirm |
| 401 | Darstellungsbereich |
| 402 | Darstellungsbereich |

## Patentansprüche

1. Verpackungsanlage,
mit zumindest zwei der folgenden Vorrichtungen:
- Absackvorrichtung
(110) - Palettiervorrichtung
(120) - Palettensicherungsvorrichtung,
**dadurch gekennzeichnet, dass**
die Vorrichtungen mit wenigstens einer Datenübertragungseinrichtung miteinander verbunden sind, wobei jede der Vorrichtungen (110, 120) eine eigene Datenbank
umfasst, wobei wenigstens eine der Vorrichtungen einen Datenbestand umfasst, wobei mit einer der anderen Vorrichtungen über die Datenübertragungseinrichtung auf den Datenbestand zugegriffen werden kann, wobei über die Datenübertragungseinrichtung Datensätze zwischen den Vorrichtungen austauschbar sind, wobei die Datensätze ein gemeinsames Datenformat aufweisen, wobei ein Bedien- und Informationssystem (140, 150, 160) an wenigstens einer der Vorrichtungen vorgesehen ist, mit welcher Datensätze aus allen Vorrichtungen anzeigbar sind, wobei die andere Vorrichtung von der einen Vorrichtung steuerbar ist.

2. Verpackungsanlage nach Anspruch 1,
**dadurch gekennzeichnet, dass**
die Datenübertragungseinrichtung ein LAN-Netzwerk umfasst.

3. Verpackungsanlage nach einem der vorstehenden Ansprüche,
**dadurch gekennzeichnet, dass**
die Datenübertragungseinrichtung ein ethernetbasiertes Netzwerk umfasst.

4. Verpackungsanlage nach einem der vorstehenden Ansprüche,
**dadurch gekennzeichnet, dass**
wenigstens eine der Vorrichtungen (110, 120) einen Massenspeicher umfasst.

5. Verpackungsanlage nach Anspruch 4, **dadurch gekennzeichnet, dass**
der Massenspeicher in einer der Vorrichtungen lokalisiert ist.

6. Verpackungsanlage nach Anspruch 4, **dadurch gekennzeichnet, dass**
der Massenspeicher auf wenigstens zwei Vorrichtungen verteilt ist.

7. Verpackungsanlage nach einem der vorstehenden Ansprüche 4-6, **dadurch gekennzeichnet, dass**
Datensätze in einem gemeinsamen Datenformat in dem Massenspeicher speicherbar sind.

8. Verfahren zum Verpacken eines schüttfähigen Produkts,
mit zumindest zwei der folgenden Schritte in zumindest zwei unterschiedlichen Vorrichtungen (110, 120):
- Absacken des Produkts in Säcke oder Beutel
- Palettieren mehrerer Säcke oder Beutel
- Sichern der auf der Palette aufgestapelten Säcke oder Beutel,
**dadurch gekennzeichnet, dass**
Daten zu wenigstens einem Schritt von der betreffenden Vorrichtung über wenigstens eine Datenübertragungseinrichtung zu einer anderen Vorrichtung übertragen werden, wobei in jeder der Vorrichtungen eine Datenbank vorgesehen ist, wobei wenigstens eine der Vorrichtungen einen Datenbestand umfasst, wobei mit einer der anderen Vorrichtungen über die Datenübertragungseinrichtung auf den Datenbestand zugegriffen wird, wobei über die Datenübertragungseinrichtung Datensätze zwischen den Vorrichtungen ausgetauscht werden, wobei die Datensätze ein gemeinsames Datenformat aufweisen, wobei mit einem Bedien- und Informationssystem (140, 150, 160) an wenigstens einer der Vorrichtungen Datensätze aus allen Vorrichtungen angezeigt werden, wobei die andere Vorrichtung von der einen Vorrichtung gesteuert wird.

## Claims

1. A packaging plant,
with at least two of the following devices:
- a bagging device (110)
- a palletizing device (120)
- a pallet securing device,
**characterized in that**
the devices are connected with each other with at least one data transmission device, wherein each of the devices (110, 120) comprise its own database, wherein at least one of the devices comprises a data pool, wherein with one of the other devices the data pool can be accessed via the data transmission device,
wherein via the data transmission device data sets are exchangeable between the devices, wherein the data sets have a common data format, wherein an operating and information system (140, 150, 160) is provided on at least one of the devices, with which data sets can be displayed from all devices, wherein the other device can be controlled by the one device.

2. A packaging plant according to Claim 1,
**characterized in that**
the data transmission device comprises a LAN network.

3. A packaging plant according to any one of the preceding claims,
**characterized in that**
the data transmission device comprises an Ethernet-based network.

4. A packaging plant according to any one of the preceding claims,
**characterized in that**
at least one of the devices (110, 120) comprises a mass storage.

5. A packaging plant according to Claim 4,
**characterized in that**
the mass storage is localized in one of the devices.

6. A packaging plant according to Claim 4,
**characterized in that**
the mass storage is allocated to at least two devices.

7. A packaging plant according to any one of the preceding claims 4-6,
**characerterized in that**
data sets can be stored in a common data format in the mass storage.

8. A method for packaging a product suitable for pouring,
with at least two of the following steps in at least two different devices (110, 120):
- Bagging the product in sacks or bags
- Palletizing several sacks or bags
- Securing the sacks or bags stacked on the pallet,
**characterized in that**
data on at least one step are transmitted from the relevant device via at least one data transmission device to another device, wherein in each of the devices a database is provided, wherein at least one of the devices comprises a data pool, wherein with one of the other devices the data pool is accessed via the data transmission device, wherein data sets are exchanged between the devices via the data transmission device, wherein the data sets have a common data format, wherein with an operating and information system (140, 150, 160) data sets from all devices are displayed on at least one of the devices, wherein the other device is controlled by the one device.

## Revendications

1. Installation d'emballage avec au moins deux des dispositifs suivants :
- dispositif d'ensachage
(110) - Dispositif de palettisation
(120) - Dispositif de fixation de palette,
**caractérisé en ce que**
les dispositifs sont reliés entre eux avec au moins un dispositif de transmission de données, chacun des dispositifs (110, 120) comprenant sa propre banque de données, au moins un des dispositifs comprenant une base de données, moyennant quoi il est possible d'accéder à la base de données avec un des autres dispositifs par l'intermédiaire du dispositif de transmission de données, des ensembles de données pouvant être échangés entre les dispositifs par l'intermédiaire du dispositif de transmission de données, les ensembles de données présentant un format de données commun, un système de commande et d'information (140, 150, 160) étant prévu sur au moins un des dispositifs, avec lequel les ensembles de données provenant de tous les dispositifs peuvent être affichés, l'autre dispositif pouvant être contrôlé par ce dispositif.

2. Installation d'emballage selon la revendication 1,
**caractérisée en ce que**
le dispositif de transmission de données comprend un réseau LAN.

3. Installation d'emballage selon l'une des revendications précédentes,
**caractérisée en ce que**
le dispositif de transmission de données comprend un réseau basé sur Ethernet.

4. Installation d'emballage selon l'une des revendications précédentes,
**caractérisée en ce que**
au moins un des dispositifs (110, 120) comprend une mémoire de masse.

5. Installation d'emballage selon la revendication 4,
**caractérisée en ce que**
la mémoire de masse est localisée dans un des dispositifs.

6. Installation d'emballage selon la revendication 4,
**caractérisée en ce que**
la mémoire de masse est répartie sur au moins deux dispositifs.

7. Installation d'emballage selon l'une des revendications précédentes 4 à 6,
**caractérisée en ce que**
les ensembles de données peuvent être enregistrés dans la mémoire de masse dans un format de données commun.

8. Procédé d'emballage d'un produit en vrac,
avec au moins deux des étapes suivantes dans au moins deux dispositifs différents (110, 120) :
- ensachage du produit dans des sacs ou des sachets,
- palettisation de plusieurs sacs ou sachets,
- fixation des sacs ou sachets empilés sur la palette,
**caractérisé en ce que**
les données concernant au moins une étape sont transmises par le dispositif concerné par l'intermédiaire d'au moins un dispositif de transmission de données à un autre dispositif, moyennant quoi, dans chacun des dispositifs, une banque de données est prévue, au moins un des dispositifs comprenant une base de données, moyennant quoi il est possible d'accéder, avec au moins un des autres dispositifs, par l'intermédiaire du dispositif de transmission de données, à la base de données, des ensembles de données étant échangés entre les dispositifs par l'intermédiaire du dispositif de transmission de données, les ensembles de données présentant un format de données commun, les ensembles de données provenant de tous les dispositifs étant affichés avec un système de commande et d'information (140, 150, 160) sur au moins un des dispositifs, l'autre dispositif étant commandé par ce dispositif.
